# EUROPÄISCHE PATENTSCHRIFT

(11) **EP 1 032 857 B1**
(45) Veröffentlichungstag und Bekanntmachung des Hinweises auf die Patenterteilung: **06.03.2002**
(21) Anmeldenummer: 98950046.7
(22) Anmeldetag: 17.09.1998
(51) Int. Cl.: G02B 6/44

(54) **STAUCHVORRICHTUNG UND STAUCHVERFAHREN**
DEVICE AND METHOD FOR COMPRESSING
DISPOSITIF ET PROCEDE DE REFOULEMENT

(30) Priorität: 23.09.1997 DE 19741934
(43) Veröffentlichungstag der Anmeldung: 06.09.2000
(73) Patentinhaber: NKT Cables GmbH, 51063 Köln (DE)
(72) Erfinder: NOLDEN, Wolfgang, D-50733 Köln (DE); GRÄNING, Herward, D-53881 Euskirchen (DE)
(86) Internationale Anmeldenummer: EP9805923
(87) Internationale Veröffentlichungsnummer: WO9915929

(56) Entgegenhaltungen:
- EP-A- 0 235 753
- DE-A- 3 910 122
- DE-A- 4 210 633
- DE-A- 19 642 542
- US-A- 5 318 215
- PATENT ABSTRACTS OF JAPAN vol. 097, no. 001, 31. Januar 1997 & JP 08 238508 A (MINATO ELECTRON KK), 17. September 1996

## Beschreibung

Die Erfindung betrifft eine Regelung einer Stauchvorrichtung nach dem Oberbegriff des 1. Anspruchs und ein entsprechendes Verfahren nach Anspruch 6.

Bei der Herstellung von Metallröhrchen, die Lichtwellenleiter enthalten, muß für die Lichtwellenieiter eine Überlänge im Metallröhrchen eingestellt werden. Hierzu gibt es verschiedene Verfahren. Eins der Verfahren, welches entweder allein oder in Kombination mit anderen Verfahren eingesetzt wird, besteht darin, das Metallröhrchen mit Lichtwellenleitern durch einen Rollenrichtgang zu transportieren. Während des Durchlaufs wird das Metatlröhrchen durch die Umschlingung einer Rolle gekrümmt und anschließend im selben Maße zurückgekrümmt. Im Ergebnis kommt eine Verkürzung oder Stauchung des Metallröhrchens zustande, die vom Durchmesser des Metallröhrchens, vom Durchmesser der Rollen des Rollenrichtgangs und vom Winkel der Umschlingung der Rollen abhängig ist (Internat. Wire & Cable Symp. Proceedings 1990, Seiten 37 - 43). Die Stauchung liegt in einem Längenbereich (einige Promille), der der Überlänge entspricht, die für den oder die Lichtwellenleiter wünschenswert ist.

Aus DE 39 10 122 A und DE 196 42 542 A sind derartige Vorrichtungen mit Regelungovorrichtungen bekannt.

Es ist Aufgabe der Erfindung, eine Stauchvorrichtung für Metallröhrchen anzugeben, bei der die Überlänge der Lichtwellenleiter einfach kontrollierbar und regelbar ist.

Die Lösung der Aufgabe findet sich in den Merkmalen der nebengeordneten Ansprüche. Vorteilhafte Ausgestaltungen finden sich in den Unteransprüchen.

Durch die erfindungsgemäße Regelung der Stauchvorrichtung und des entsprechenden Stauchverfahrens ist eine Verbesserung der Qualität möglich, da die Überlänge zahlenmäßig vorgebbar ist und durch die Vorrichtung bzw. durch das Verfahren eine automatische Umsetzung der Vorgabe erfolgt. Weiterhin ist eine direkte Produktionskontrolle an Ort und Stelle möglich.

Ein Rollenrichtgang hat in der Regel eine Anzahl fester Rollen und eine Anzahl zustellbarer Rollen, die sich in die Zwischenräume der ersten Rollen hineinbewegen lassen. Man kann auch Rollenrichtgänge einsetzen, bei denen jede Rolle in Zustellrichtung (Eintauchtiefe zwischen Nachbarrollen). Der Umschlingungswinkel und damit der Grad der elastischen und bleibenden plastischen Verformung sind abhängig vom Durchmesser der Rollen, Größe der Eintauchtiefe und vom Abstand der Rollen nebeneinander. Ein geeigneter Rollenrichtgang kann aus zwei Rollen, besser jedoch aus einer ungeraden Anzahl von Rollen (mindestens drei) bestehen. In letzterem Fall liegt eine symmetrische Anordnung vor, in der die Kräfte symmetrisch angreifen. Es lassen sich auch Rollenrichtgänge benutzen, bei denen die Rollen unterschiedliche Durchmesser haben, beispielsweise abwechselnd einen größeren und einen kleineren.

Der Verkürzungseffekt tritt durch plastische Verformung ein, die zu einer Verdickung der Wandstärke des Metallröhrchens führt. Die Längenverminderung des Röhrchens wird in eine Verdickung der Wand umgeformt. Wegen der Längenverminderung hat das aus dem Rollenrichtgang austretende Röhrchen eine geringfügig, aber meßbar kleinere Geschwindigkeit als auf den Eintrittsseite des Rollenrichtgangs. Dieser Geschwindigkeitsunterschied soll für die quantitative Regelung der Verkürzung genutzt werden.

Das Wesentliche der Vorrichtung besteht darin, daß vor und hinter dem Rollenrichtgang je eine Meßvorrichtung für die Geschwindigkeit des Metallröhrchens (vorzugsweise aus Edelstahl) angeordnet ist, daß mit der Meßvorrichtung der Geschwindigkeitsunterschied vor und hinter dem Rollenrichtgang ermittelbar ist und daß die Zustelleinrichtung abhängig vom Geschwindigkeitsunterschied veränderbar ist.

Vorzugsweise soll die Meßvorrichtung berührungslos messen. Hierfür kommen elektrische oder optische Verfahren infrage. Eine elegante Methode ist die der optischen Geschwindigkeitsmessung, andere Verfahren können auf dem Prinzip des Radars (Messung mit Mikrowellen) beruhen.

Das Metallröhrchen durchläuft in einer Ebene den Rollenrichtgang. Es hat sich als Vorteil herausgestellt, wenn zwei Rollenrichtgänge hintereinander angeordnet werden, wobei der eine gegenüber dem anderen senkrecht angeordnet ist. Die Rollen des Richtgangs haben ein kreisrundes (Hohl-) Profil, das dem Außendurchmesser des Metallröhrchens entspricht. Da das Metallröhrchen jedoch eine Verformung erleidet, hat es sich als günstig erwiesen, wenn die Rollen des Rollenrichtgangs ein ovales Profil haben und die kleine Achse des Ovals (Ellipse) parallel zur Achse der Rollen liegt.

Neben der Vorrichtung wird auch ein Verfahren zum Stauchen eines Metallröhrchens mit mindestens einem innenliegenden Lichtwellenleiter mittels Rollenrichtgang mit einer Zustelleinrichtung der Rollen bezüglich des Umschlingungswinkels vorgeschlagen, wobei das Metallröhrchen vor dem Rollenrichtgang von einer Ablaufrolle abgewickelt und nach dem Rollenrichtgang auf eine Abzugrolle aufgewickelt wird. Hierbei soll vor und hinter dem Rollenrichtgang die Geschwindigkeit des Metallröhrchens gemessen, aus der Messung der Geschwindigkeitsunterschied vor und hinter dem Rollenrichtgang ermittelt und der Geschwindigkeitsunterschied als Stellgröße für die Zustelleinrichtung benutzt werden. Hierbei können die Stellgrößen an Motoren weitergegeben, die die Stellschrauben des Rollenrichtgangs verdrehen.

Vorzugsweise soll die Zustelleinrichtung automatisch durch die Stellgröße (Geschwindigkeitsunterschied) gesteuert werden.

Vorzugsweise kann das Verfahren so verfeinert werden, daß abhängig vom Geschwindigkeitsunterschied die Antriebe von Ablaufrolle und Abzugrolle geregelt werden. Das bedeutet, daß ausgehend von einer synchronen Geschwindigkeit von Ablauf- und Abzugrolle ein kleiner Geschwindigkeitsunterschied eingeregelt wird, der sich im Bereich von einigen Promille bewegt. Hierzu könnte die Ablaufrolle auch gegenüber der Abzugrolle gebremst werden.

Ein Ausführungsbeispiel der Erfindung wird in den Figuren dargestellt. Es zeigen:
Fig. 1 Rollenrichtgang mit zwei Rollen,
Fig. 2 Rollenrichtgang mit drei Rollen,
Fig. 3 Profil einer Laufrolle und
Fig. 4 eine Stauchvorrichtung mit Meßeinrichtung.

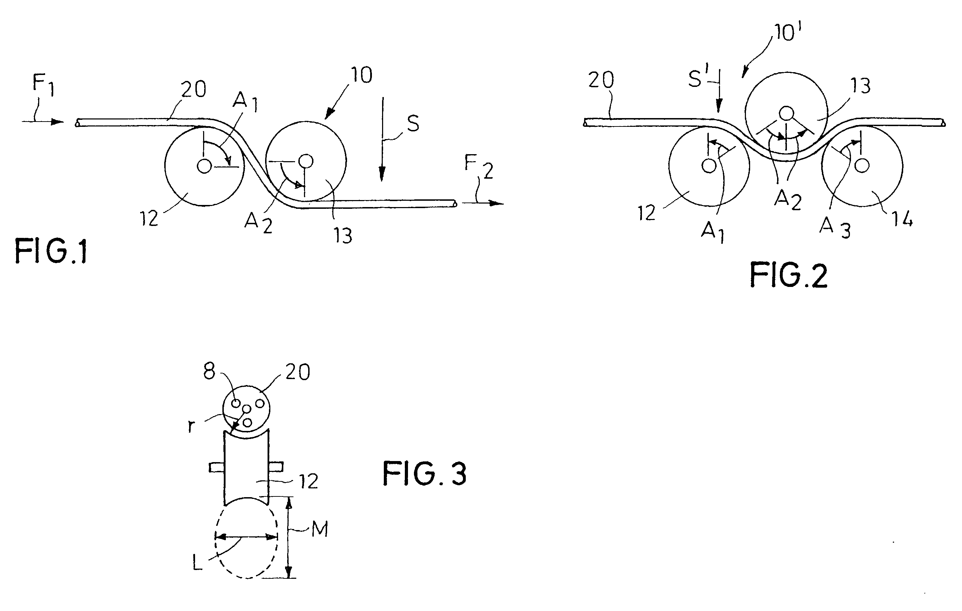

In Fig. 1 wird ein Rollenrichtgang 10 mit zwei Rollen 12,13 und in Fig. 2 ein Rollenrichtgang 10' mit drei Rollen 12,13,14 (mit gleichem Durchmesser) gezeigt. Die Rolle 13 ist in Richtung S (Pfeil-Richtung und Pfeil-Länge S, Eintauchtiefe) zustellbar. Der Umschlingungswinkel A bildet sich in Abhängigkeit vom Durchmesser der Rollen, Größe der Eintauchtiefe S und vom Abstand der Rollen nebeneinander. Die Umschlingung (Winkel A1, A2) des Metallröhrchens 20 um die Rollen ist in Fig. 1 etwa 90°; also relativ groß. In Fig. 2 ist die Zustellgröße S' der mittleren Rolle 13 kleiner als Zustellgröße S in Fig. 1 und die Umschlingungswinkel A1, A2, A3 sind dementsprechend kleiner; nämlich etwa 45°.

Das Metallröhrchen wird mit einer bestimmten Kraft F1 von der Abzugrolle 11 (Fig. 1) kommend durch den Rollenrichtgang hindurchbewegt und mit einer Kraft F2 von der Aufzugsrolle 11' (Fig. 1) aufgenommen. Wie erwähnt, kann der Antrieb der An- und Abzugsrollen so gesteuert werden, daß die Kräfte auf das Metallröhrchen minimal werden. Geeignete Durchmesser der Rollen sind 20 bis 40 mm, vorzugsweise 30 mm. Bearbeitet werden hiermit Metallröhrchen aus Edelstahl mit Außendurchmessern von 3 bis 4 mm.

In Fig. 3 ist das Profil einer Rolle 12 gezeigt. In der Regel hat das Profil denselben Radius r wie der Außenradius des Metallröhrchens 20. In Fig. 3 unten ist ein Oval mit zwei Achsen L,M angedeutet. Die kleinere Achse L liegt parallel zur Achse der Rolle 12, wodurch man erreicht, daß der Druck auf das Metallröhrchen 20 möglichst keine Ovalität erzeugt. Im Metallröhrchen sind vier Lichtwellenleiter 8 angedeutet.

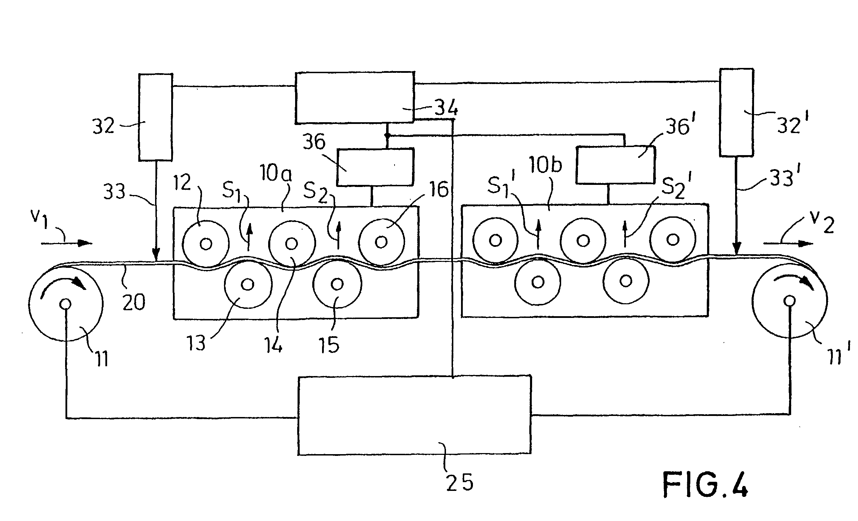

In Fig. 4 sind im wesentlichen Meß- und Steuereinrichtung an einem (doppelten) Rollenrichtgang dargestellt. Es handelt sich um einem ersten Rollenrichtgang 10a, dem ein weiterer 10b nachgeordnet ist. Die Achsen der Rollen des zweiten Rollenrichtgangs 10b stehen senkrecht zu den Achsen der Rollen des ersten 10a. Mit S1,S2,S1',S2' sind die Zustellgrößen für zwei bewegliche Rollen angedeutet. Die Steuerung der Zustellung erfolgt über eine Einrichtung 36,36', die entweder manuell oder motorisch auf Stellschrauben arbeitet. Die Zustellsteuerung 36 und/oder die Steuerung 25 des Antriebs der Ablauf- 11 und Abzugrolle 11' wird über die Meßeinrichtung 34 für die Geschwindigkeit beaufschlagt. Mit den Bezugszeichen 32,32' sind Laser angedeutet, deren Lichtstrahlen 33,33' zur Geschwindigkeitsmessung des Metallröhrchens 20 vor und hinter dem Rollenrichtgang herangezogen werden. v1 und v2 sind die Geschwindigkeiten des Metallröhrchens 20 vor und hinter dem Rollenrichtgang. Wobei Geschwindigkeit v2 wegen des Stauchvorgangs kleiner ist als Geschwindigkeit v1. Die durch die Stauchung erzielten Überlängen liegen im Bereich von wenigen (1 bis 6) Promille.

## Patentansprüche

1. Vorrichtung zum Regeln des Stauchens eines Metallröhrchens (**20**) mit mindestens einem innenliegenden Lichtwellenleiter (**8**) mit mindestens einer Richtvorrichtung (**10**) mit mehreren Umlenkrollen (**12**-**16**), mit einer Verschiebevorrichtung (**36**,**36**') für mindestens eine der Umlenkrollen (**13, 15**) gegenüber den anderen, wodurch sich ein Winkel (**A1**,**A2**) der Umschlingung des Metallröhrchens (**20**) um die verschiebbaren Umlenkrollen (**13**,**15**) ändert und wobei das Metallröhrchen (**20**) vor einer Richtvorrichtung (**10**) von einer Ablaufrolle (**11**) abgewickelt und hinter dieser Richtvorrichtung (**10**) auf eine Abzugsrolle (**11'**) aufgewickelt wird, und die Verschiebung der verschiebbaren Umlenkrollen (**13, 15**) abhängig vom Geschwindigkeitsunterschied vomehmbar ist, **dadurch gekennzeichnet, daß**
vor und hinter der Richtvorrichtung (**10**) je eine Meßvorrichtung (**34**) für die Geschwindigkeit (**v1, v2**) des Metallröhrchens (**20**) angeordnet und mit ihr (**34**) der Geschwindigkeitsunterschied vor und hinter der Richtvorrichtung (**10**) ermittelbar ist, und
daß eine Steuerung der Antriebe von Ablaufrolle (**11**) und Abzugrolle (**11**') zwischen Ablaufrolle (**11**) und Abzugrolle (**11'**) vorhanden ist, mit der ein Geschwindigkeitsunterschied einregelbar ist,
so daß die Zugkräfte **(F1 ,F2)** auf das Metallröhrchen (**20**) minimal werden.

2. Stauchvorrichtung nach Anspruch 1, **dadurch gekennzeichnet, daß** die Meßvorrichtung (**32,32'**) eine berührungslose Meßeinrichtung ist.

3. Stauchvorrichtung nach Anspruch 2, **dadurch gekennzeichnet, daß** die Meßvorrichtung (**32,32'**) eine optische Meßeinrichtung ist.

4. Stauchvorrichtung nach einem der vorhergehenden Ansprüche, **dadurch gekennzeichnet, daß** einer Richtvorrichtung (**10a**) eine weitere (**10b**) nachgeordnet ist, die senkrecht zur ersten angeordnet ist.

5. Stauchvorrichtung nach einem der vorhergehenden Ansprüche, **dadurch gekennzeichnet, daß** die Umlenkrollen (**12-16**) der Richtvorrichtung (**10,10a,10b**) ein ovales Profil haben.

6. Verfahren zum Regeln des Stauchens eines Metallröhrchens (**20**) mit mindestens einem innenliegenden Lichtwellenleiter (**8**) mittels Richtvorrichtung (**10**) mit mehreren Umlenkrollen (**12-16**), mit einer Verschiebevorrichtung (**36,36'**) für mindestens eine der Umlenkrollen (**13,15**) gegenüber den anderen, wodurch sich ein Winkel **(A1,A2)** der Umschlingung des Metallröhrchens (**20**) um die verschiebbaren Umlenkrollen **(13,15)** ändert, wobei das Metallröhrchen (**20**) vor der Richtvorrichtung (**10**) von einer Ablaufrolle (**11**) abgewickelt und hinter der Richtvorrichtung (**10**) auf eine Abzugrolle (**11**') aufgewickelt wird, **dadurch gekennzeichnet, daß** vor und hinter der Richtvorrichtung (**10**) die Geschwindigkeit (**v1,v2**) des Metallröhrchens (**20**) gemessen wird, daß aus der Messung der Geschwindigkeitsunterschied vor und hinter der Richtvorrichtung (**10**) ermittelt wird, daß der Geschwindigkeitsunterschied als Stellgröße für die Verschiebevorrichtung (**36**,**36**') benutzt wird und daß abhängig vom Geschwindigkeitsunterschied die Antriebe von Ablaufrolle (**11**) und Abzugrolle (**11'**) derart geregelt werden, daß die Zugkräfte (**F1**,**F2**) auf das Metallröhrchen (**20**) minimal werden.

7. Verfahren nach dem Anspruch 6, **dadurch gekennzeichnet, daß** die Stellgröße automatisch die Verschiebevorrichtung (**36,36'**) steuert.

## Claims

1. A device for regulating the compression of a metal tube (20) with at least one light wave guide (8) located therein, with at least one straightening device (10) with several deflection rollers (12-16). with a displacement device (36, 36') for displacing at least one of the deflection rollers (13, 15) in relation to the others, whereby an angle (A1, A2) of the contact of the metal tube (20) around the displaceable deflection rollers (13, 15) varies, and wherein the metal tube (20) is unwound from a feed roller (11) ahead of a straightening device (10) and wound onto a draw-off roller (11') behind this straightening device (10), and the displacement of the displaceable deflection rollers (13, 15) may be effected in dependence on the speed difference, **characterised in that**
respective measuring devices (34) for the speed (v1, v2) of the metal tube (20) are arranged ahead of and behind the straightening device (10) and with them (34) the speed difference ahead of and behind the straightening device (10) may be ascertained, and
**in that** control of the drives of the feed roller (11) and draw-off roller (11') is provided between the feed roller (11) and draw-off roller (11'), with which a speed difference may be adjusted so that the tensile forces (F1, F2) on the metal tube (20) become minimal.

2. A compression device according to claim 1, **characterised in that** the measuring device (32, 32') is a contactless measuring arrangement.

3. A compression device according to claim 2, **characterised in that** the measuring device (32, 32') is an optical measuring arrangement.

4. A compression device according to one of the preceding claims, **characterised in that** one straightening device (10a) is followed by a further one (10b) arranged perpendicularly to the first one.

5. A compression device according to one of the preceding claims, **characterised in that** the deflection rollers (12-16) of the straightening device (10, 10a, 10b) have an oval profile.

6. A method for regulating the compression of a metal tube (20) with at least one light wave guide (8) located therein by means of a straightening device (10) with several deflection rollers (12-16), with a displacement device (36, 36') for displacing at least one of the deflection rollers (13, 15) in relation to the others, whereby an angle (A1, A2) of the contact of the metal tube (20) around the displaceable deflection rollers (13, 15) varies, wherein the metal tube (20) is unwound from a feed roller (11) ahead of the straightening device (10) and wound onto a draw-off roller (11') behind the straightening device (10), **characterised in that** the speed (v1, v2) of the metal tube (20) is measured ahead of and behind the straightening device (10). **in that** from the measurement the speed difference ahead of and behind the straightening device (10) is ascertained, **in that** the speed difference is used as adjustment variable for the displacement device (36, 36') and **in that** in dependence on the speed difference the drives of the feed roller (11) and the draw-off roller (11') are regulated in such a way that the tensile forces (F1, F2) on the metal tube (20) become minimal.

7. A method according to claim 6. **characterised in that** the adjustment variable automatically controls the displacement device (36, 36').

## Revendications

1. Dispositif de réglage de l'écrasement d'un tube capillaire métallique (20) à l'intérieur duquel est agencé au moins un guide d'onde lumineuse (8), comportant au moins un dispositif de dressage (10) doté de plusieurs galets déflecteurs (12 à 16), un dispositif de déplacement (36, 36') d'au moins un des galets déflecteurs (13, 15) par rapport aux autres galets, qui permet de modifier un angle (A1, A2) de l'enroulement du tube capillaire métallique (20) autour des galets déflecteurs déplaçables (13, 15), dans lequel le tube capillaire métallique (20) est déroulé d'une bobine de déroulement (11) agencée en amont du dispositif de dressage (10) et est enroulé sur une bobine de tirage (11') agencée en aval de ce dispositif de dressage (10), et dans lequel le déplacement des galets déflecteurs déplaçables (13, 15) est effectué en tenant compte de la différence de vitesses, **caractérisé en ce que** :
un dispositif est agencé pour la mesure (34) de la vitesse (v1, v2) du tube capillaire métallique (20) en amont et en aval du dispositif de dressage (10), qui est apte à calculer la différence des vitesses en amont et en aval du dispositif de dressage (10), et **en ce que**
une commande de l'entraînement de la bobine de déroulement (11) et de la bobine de tirage (11') est prévue entre la bobine de déroulement (11) et la bobine de tirage (11'), au moyen de laquelle une différence de vitesses peut être réglée de telle sorte que les forces de traction (F1, F2) exercées sur le tube capillaire métallique (20) soient minimales.

2. Dispositif d'écrasement selon la revendication 1, **caractérisé en ce que** le dispositif de mesure (32, 32') est un dispositif de mesure sans contact.

3. Dispositif d'écrasement selon la revendication 2, **caractérisé en ce que** le dispositif de mesure (32, 32') est un dispositif de mesure optique.

4. Dispositif d'écrasement selon l'une des revendications précédentes, **caractérisé en ce que**, en aval du dispositif de dressage (10a), est agencé un autre dispositif de dressage (10b) qui est agencé perpendiculairement au premier.

5. Dispositif d'écrasement selon l'une des revendications précédentes, **caractérisé en ce que** les galets déflecteurs (12 à 16) du dispositif de dressage (10, 10a, 10b) ont un profil ovale.

6. Procédé de réglage de l'écrasement d'un tube capillaire métallique (20) à l'intérieur duquel est agencé au moins un guide d'onde lumineuse (8), au moyen d'un dispositif de dressage (10) comportant plusieurs galets déflecteurs (12 à 16), et d'un dispositif de déplacement (36, 36') d'au moins un des galets déflecteurs (13, 15) par rapport aux autres galets, qui permet de modifier un angle (A1, A2) de l'enroulement du tube capillaire métallique (20) autour des galets déflecteurs déplaçables (13, 15), le tube capillaire métallique (20) étant déroulé d'une bobine de déroulement (11) agencée en amont du dispositif de dressage (10) et étant enroulé sur une bobine de tirage (11') agencée en aval dudit dispositif de dressage (10), caractérisé en que la vitesse (v1, v2) du tube capillaire métallique (20) est mesurée en amont et en aval du dispositif de dressage (10), en ce que la différence des vitesses en amont et en aval du dispositif de dressage (10) est calculée à partir de la mesure effectuée, en ce que la différence de vitesses est utilisée comme grandeur de commande pour le dispositif de déplacement (36, 36'), et en ce que l'entraînement de la bobine de déroulement (11) et de la bobine de tirage (11') est réglé en fonction de la différence de vitesses de telle sorte que les forces de traction (F1, F2) exercées sur le tube capillaire métallique (20) soient minimales.

7. Procédé selon la revendication 6, **caractérisé en ce que** la grandeur de commande commande automatiquement le dispositif de déplacement (36, 36').
